# EUROPÄISCHE PATENTSCHRIFT

(11) **EP 1 365 939 B1**
(45) Veröffentlichungstag und Bekanntmachung des Hinweises auf die Patenterteilung: **16.05.2007**
(21) Anmeldenummer: 02722179.5
(22) Anmeldetag: 05.03.2002
(51) Int. Cl.: B60N 2/08

(54) **EINRICHTUNG FÜR EINE SITZLÄNGSVERSTELLUNG, INSBESONDERE INNERHALB EINES KFZ**
LONGITUDINAL SEAT ADJUSTMENT DEVICE, ESPECIALLY IN A MOTOR VEHICLE
DISPOSITIF DE REGLAGE LONGITUDINAL D'UN SIEGE, EN PARTICULIER DANS UNE AUTOMOBILE

(30) Priorität: 05.03.2001 DE 10110245
(43) Veröffentlichungstag der Anmeldung: 03.12.2003
(60) Teilanmeldung: 07003473.1
(73) Patentinhaber: IMS Gear GmbH, 78166 Donaueschingen (DE)
(72) Erfinder: HOFSCHULTE, Wolfram-Heinrich, 79848 Bonndorf (DE); WÖHRLE, Michael, 78078 Niedereschach (DE); PROBST, Frank, 78052 Obereschach (DE); KRIMMEL, Fred, 72474 Winterlingen (DE)
(74) Vertreter: Patentanwälte Westphal, Mussgnug & Partner
(86) Internationale Anmeldenummer: PCT/EP2002/002396
(87) Internationale Veröffentlichungsnummer: WO 2002/070299

(56) Entgegenhaltungen:
- DE-A- 19 815 283
- DE-A- 19 944 690
- DE-C- 4 227 846

## Beschreibung

Die Erfindung betrifft eine Einrichtung für eine SitzlängsverStellung, insbesondere innerhalb eines Kfz, gemäß den Merkmalen des Oberbegriffs des Anspruchs 1.

Solche Sitzlängsverstellungen sind zwischenzeitlich hinlänglich bekannt. Die Sitzlängsverstellungen weisen eine an einem Chassis festgelegte Unterschiene auf, innerhalb der eine Oberschiene, an der der Sitz befestigt ist, motorisch verfahrbar ist. Hierbei sitzt innerhalb der Oberschiene eine an der Unterschiene mit ihren jeweiligen Enden festgelegte Spindel, auf welcher ein mit der Oberschiene feststehend gekoppeltes Getriebe axial beweglich angeordnet ist. Der Sitz, der sich auf den beiden parallel zueinander angeordneten Oberschienen befindet-, kann über eine motorische Einrichtung, die zwischen den Schienen sitzt, verfahren werden.

Beispiele für Einrichtungen zu Sitzlängsverstellungen sind in DE 36 40 197 A1, DE 42 08 948 C2, DE 196 42 655 C2, DE 198 15 283 A1, DE 198 44 817 A1, DE 199 44 690 A1 und WO 95/16 585 beschrieben worden.

Der Erfindung liegt die Aufgabe zugrunde, eine kompakte Sitzlängsverstellungseinrichtung anzugeben, bei der nur wenige Bauteile notwendig sind und welche insbesondere im Falle eines Crashs die auftretenden Kräfte ohne weiteres aufnehmen kann. Hierbei soll das aufzufindende Getriebe zur Längsverstellung des Sitzes die Rotationsbewegung des Antriebsmotors in eine Translationsbewegung umwandeln.

Eine weitere Aufgabe der vorliegenden Erfindung besteht darin, daß der Bauraum der Sitzlängsverstellungseinrichtung verhältnismäßig klein, vorzugsweise in der Breite nur 15 mm betragen soll. Darüber hinaus soll die zulässige Überragung der Oberschiene ebenfalls nicht allzu groß, maximal etwa 15 mm sein. Schließlich soll die erfindungsgemäße Einrichtung eine Festigkeitsforderung in beide Richtungen erfüllen, die bspw. 25000 N beträgt. Schließlich soll die erfindungsgemäße Einrichtung verhältnismäßig schnell, d. h. z. B. zwischen 15 und 25 mm/s über einen verhältnismäßig langen Verstellbereich von z. B. 300 mm verstellbar sein.

Diese Aufgabe wird durch eine Einrichtung mit den Merkmalen des Anspruchs 1 gelöst.

Weiterbildungen der Erfindung sind Gegenstand der hierauf bezogenen Unteransprüche.

In einer bevorzugten Ausbildung der Erfindung wird die Rotationsbewegung des Motors über eine Flexwelle, eine Schnecke, eine Spindel und eine Spindelmutter in die Translationsbewegung umgewandelt.

Zur Geräuschreduzierung empfiehlt es sich, die Spindel vorzugsweise exakt parallel zur Ober- und Unterschiene auszurichten.

In einer anderen Weiterbildung der Erfindung ist mindestens eines der Wandteile der Oberschiene mit einer Ausnehmung versehen, durch welche eine mit einem Antriebsmotor gekoppelte Flexwelle geführt ist.

In einer weiteren Ausbildung der Erfindung sind Seitenwandungen der Oberschiene als Schlitzbrücken ausgebildet und in das Innere der Oberschiene gedrückt, wobei sich das Getriebegehäuse an diesen Schlitzbrücken abstützen kann.

Das Getriebegehäuse besteht vorzugsweise aus zwei aus Kunststoff bestehenden Gehäuseschalen, welche durch Ultraschallverschweißung miteinander verbunden sind. Zweckmäßigerweise ist das Gehäuse, das durch Ultraschallverschweißung der beiden Gehäusehälften verbunden ist, nur auf Druckbelastung ausgelegt.

Eine klemmende Halterung des Getriebes wird erfindungsgemäß durch gegenüberliegend in eine Aussparung der Oberschiene eingearbeitete L-förmig gebogene Metallbügel erreicht, zwischen denen das Getriebegehäuse mit Wandschrägen eingeschoben wird.

Die Spindelmutter und die oben erwähnte Stützscheibe, welche sich im Crashfall in Wandungen der Oberschiene abstützen kann, sind vorzugsweise einteilig bzw. einstückig ausgebildet. Beide bestehen bevorzugt aus Metall.

In einer anderen Weiterbildung ist koaxial auf die Spindelmutter eine Schneckennaht durch Kunststoffspritzen aufgebracht.

Die Funktionsweise der Sitzlängsverstellung ist folgende. Das Getriebe wird in eine U-förmige Sitzschiene eingebaut. Diese Sitzschiene besteht aus einer Unter- und einer Oberschiene, wie oben erwähnt. Die Unterschiene ist mit der Fahrzeugkarosserie verbunden, während die Oberschiene mit dem Fahrzeugsitz verbunden ist. Das Getriebegehäuse wird über zwei Nasen mit der Oberschiene fixiert und bevorzugt mit einem Spannstift gesichert. Die Spindelmutter selbst ist über zwei Schrauben mit der Unterschiene verbunden. Über die Translationsbewegung der Spindel-Spindelmutterpaarung erfolgt die Verstellung des Sitzes. Zur Verstellung eines Sitzes werden zwei Schienen und damit zwei Getriebe (ein linkes und ein rechtes) benötigt.

Die Hauptfunktion des Getriebes besteht in der Umwandlung der Rotationsbewegung in eine Translationsbewegung. Die Rotationsbewegung wird mittels eines Motors und der adaptierten Flexfälle über einen in der Getriebeschnecke integrierten Vierkant auf das Getriebe übertragen. Die Spindel wird über das umspritzte Schneckenrad mit einem definierten Übersetzungsverhältnis angetrieben. Die Umwandlung in die Translationsbewegung erfolgt über die Spindel-Spindelmutterpaarung. Beide Teile verfügen über ein Trapezgewinde.

Das erfindungsgemäße Getriebe zeichnet sich insbesondere dadurch aus, daß es im Crashfall sehr hohe Kräfte aufnehmen kann. Das Gehäuse des Getriebes ist selbst nicht in der Lage, die Kräfte bei einem Frontalcrash aufzunehmen. Solche Kräfte liegen bei etwa 24000 N. Im Crashfall wird bei dem erfindungegemäßen Getriebe das Gehäuse des Getriebes zerstört und die stützscheibe, die bevorzugt aus Metall besteht, kann beidseitig gegen die Kontaktflächen der Oberschiene anstoßen. Die Teile Oberschiene, Stützscheibe, Spindel, Spindelmutter und Unterschiene befinden sich bei der erfindungsgemäßen Einrichtung für eine Sitzlängsverstellung im Crashfall im Kraftfluß und können vorteilhafterweise die Crashkräfte aufnehmen.

Die erfindungsgemäße Einrichtung für eine Sitzlängsverstellung zeichnet sich durch eine freie Positionierbarkeit der Getriebe auf der Schiene, der einstückigen Ausbildung Stützscheibe/Spindelmutter, eine drehende Mutter und eine drehende Spindel aus. Darüber hinaus ergibt sich mit der erfindungsgemäßen Einrichtung ein größerer Verfahrweg bei gleichen Einbaubedingungen.

Darüber hinaus zeichnet sich die erfindungsgemäße Einrichtung bzw. das darin realisierte Getriebe durch folgende Merkmale aus.

Der getriebetechnische Verstellantrieb besteht nur aus vier bzw. fünf Bauteilen. Die Verzahnungsteile des Schneckengetriebes werden in einem Kunststoffkäfig direkt gelagert. Auf gesonderte Lagerbauteile kann verzichtet werden. Die Käfigbestandteile werden durch Ultraschallverschweißung mit dem Hinblick auf spielfreie Funktion der Verzahnungsteile über einen individuellen Absenkweg verbunden und fixiert. Die Flexwellenanbindung ist integraler Bestandteil der Getriebefixierung an der Sitzschiene. Die Flexwellenanbindung stellt eine koaxiale Fixierung der rotierenden Flexwelle zur Antriebsschnecke sicher und wird vorzugsweise über eine Bajonettverbindung mit Schnappverschluß am Kunststoffkäfig befestigt.

Der Getriebekäfig wird mittels Schlitzbrücken und Blechdurchzüge spielfrei aber elastisch mit der Sitzschiene verbunden und kann individuell im Montageprozeß angepaßt werden. Die Spindelmutter ist zugleich Schneckenrad und Stützscheibe. Die integrierte Stützscheibe entlastet im Falle eines Crashs das Kunststoffgetriebe von Crashkräften. Die Stützscheibe stützt sich dabei mittels Überstand an in der Sitzschiene angebrachter Ausnehmungen ab. Die Gewindespindel läßt sich für Montage und Raparaturzwecke nachträglich demontieren.

Die erfindungsgemäße Einrichtung zur Sitzlängsverstellung wird nachfolgend im Zusammenhand mit mehreren Figuren anhand eines Ausführungsbeispieles näher erläutert. Es zeigen:
- Fig. 1: eine perspektivische Darstellung der Unterschiene mit eingebauter Spindel sowie auf der Spindel sitzendem Getriebe in Draufsicht in perspektivischer Darstellung,
- Fig. 2: eine perspektivische Darstellung der Schiene von Fig. 1 mit eingesetzter Oberschiene bzw. Sitzschiene,
- Fig. 3: eine Detaildarstellung des in der Oberschiene gehaltenen Getriebes,
- Fig. 4: eine Stirnansicht der in Fig. 2 und 3 dargestellten Anordnung in Stirnansicht,
- Fig. 5: beispielhafte Maßangaben über den Verfahrweg der Oberschiene zur Unterschiene in mm,
- Fig. 6: eine Detailansicht der Endanschlagüberdeckung,
- Fig. 7: das Sitzschienenprofil im Getriebebereich,
- Fig. 8: die Oberschienenansicht mit aufgebrochenem Gehäuse,
- Fig. 9: eine Detaildarstellung der Getriebebefestigung zur Unterschiene,
- Fig. 10: einen Vorschlag für eine Montagefolge der erfindungsgemäßen Einrichtung,
- Fig. 11: der Bereich des Getriebes in vergrößerter Darstellung,
- Fig. 12: das Getriebe in Explosionsansicht,
- Fig. 13: eine Detailansicht des Flexwellenadapters,
- Fig. 14: Detailansichten zur Erläuterung der Aufnahme der Crashkräfte bei der erfindungsgemäßen Einrichtung.

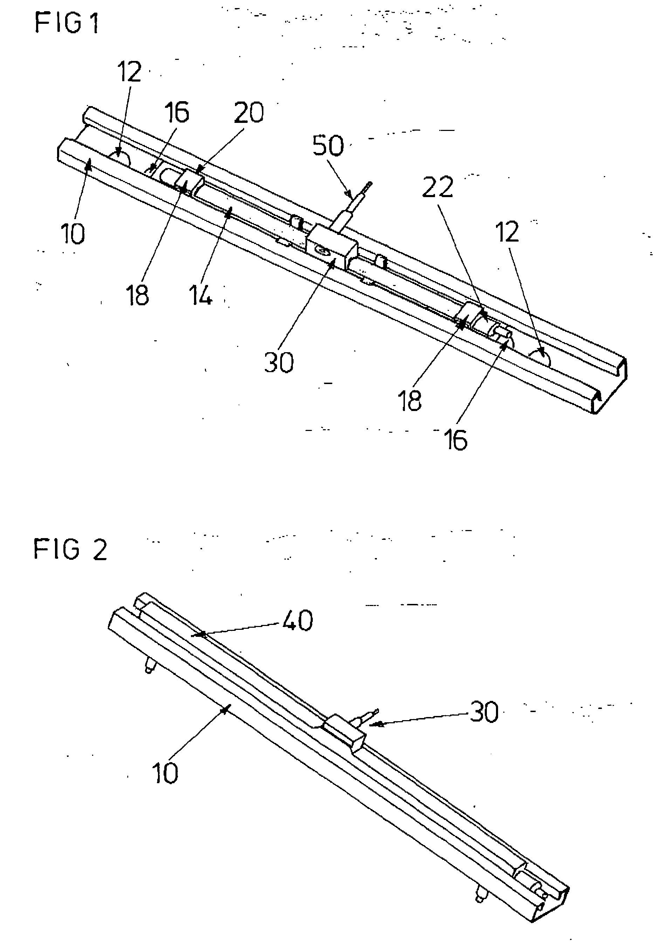

Wie aus Fig. 1 ersichtlich, sitzt innerhalb einer im Querschnitt U-förmigen Unterschiene 10, die endseitig über Befestigungsschrauben 12 am Chassis eines Fahrzeuges festgelegt ist, eine Spindel 14. Diese Spindel 14 ist an ihren beiden Enden über einen Endanschlag 18 in der Unterschiene 10 feststehend angeordnet. Die Verbindung zwischen Spindel 14 und Unterschiene 10 kann auf beliebige Weise erfolgen. Im dargestellten Ausführungsbeispiel ist diese Spindel 14 über ihre Endanschläge 18 mittels Befestigungsnieten 16 am Boden der Unterschiene 10 befestigt. An dem in Fig. 1 links dargestellten oberen Ende der Spindel 14 befindet sich eine Einstellmutter 20 und am rechts unten dargestellten Ende eine Anschlagmutter 22. Auf der Spindel ist ein Getriebe 30, das im Einzelnen noch erläutert werden wird, verfahrbar angeordnet. Das Getriebe 30 wird von einer Flexwelle 50 angetrieben. Bei rotierender Flexwelle 50 bewegt sich das Getriebe 30 auf der Spindel 14 nach links oder rechts, je nachdem, in welche Richtung die Flexwelle 50 dreht.

Mit dem Getriebe 30 ist feststehend eine Oberschiene 40 gekoppelt. Auf der Oberschiene 40 ist ein Sitz, bevorzugt ein Sitz eines Kraftfahrzeugs, befestigt. Die Unterschiene 10 samt Oberschiene 40 und Getriebe 30 sind parallel zueinander unter einem zu verstellenden Sitz angeordnet. Zwischen jeweils einem solchen Schienenpaar sitzt ein Antriebsmotor, welcher die Flexwelle 50 jedes Getriebes 30 antreibt, so daß der Sitz nach vorn oder hinten bewegt werden kann.

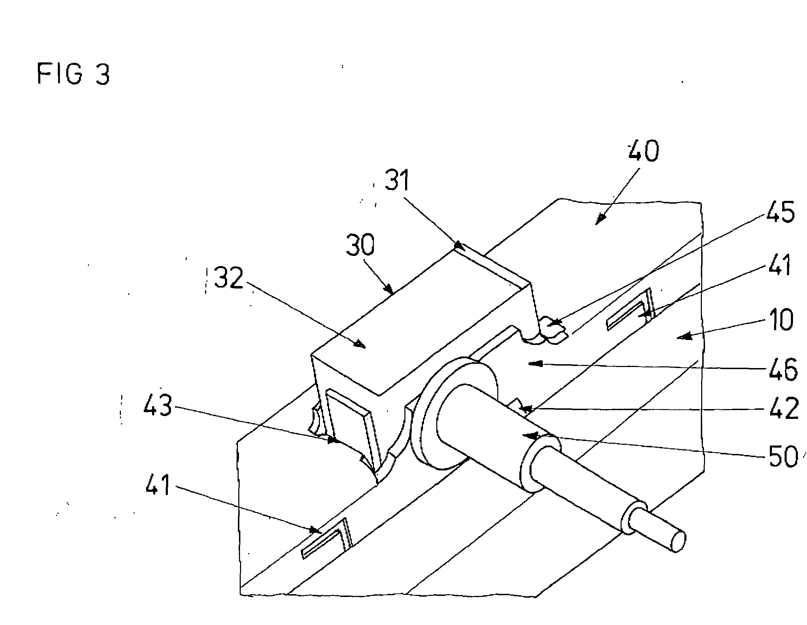

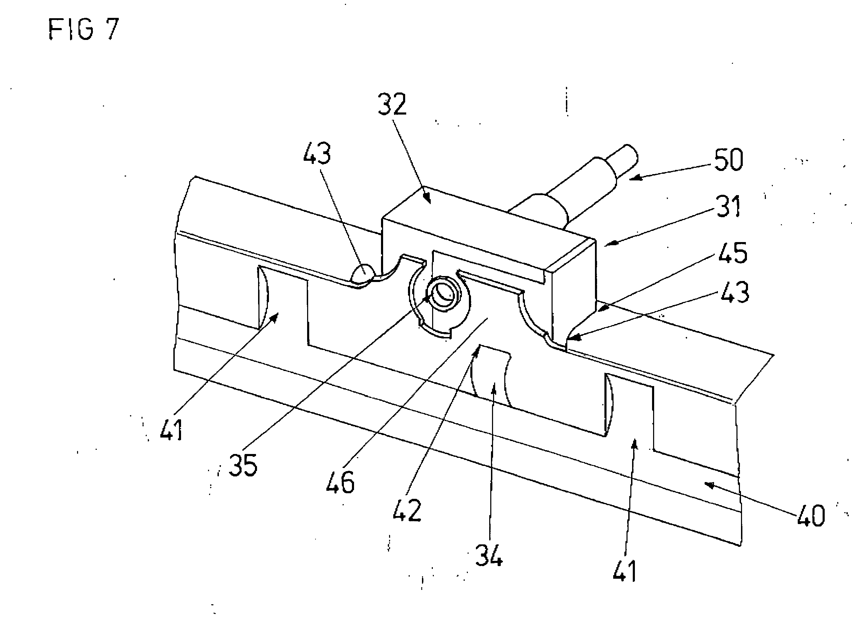

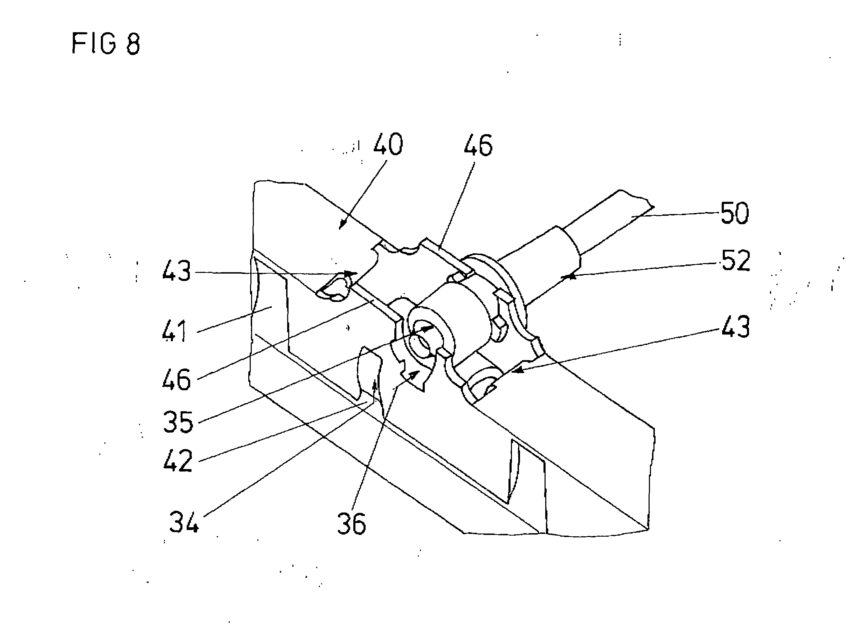

In Fig. 3 ist der Getriebesitz in der Oberschiene 40 vergrößert dargestellt. Eine ähnliche Darstellung, jedoch von der anderen Seite her gesehen, mit weggelassener Unterschiene, zeigt Fig. 7. Die Oberschiene 40 verfügt auf ihrem oberen Wandteil über eine Ausnehmung 45, in der das kastenförmige Gehäuse des Getriebes 30 sitzt. Das Getriebe 30 wird klemmend in dieser Ausnehmung 45 gehalten. Hierfür sind Wandabschnitte der oberen Wandung um 90° nach innen in die Ausnehmung 45 gebogen und dienen als Anschlagnase 43. Zwei dieser Anschlagnasen 43 befinden sich gegenüberliegend in Längserstreckung der Oberschiene 40. Diese Anschlagnasen 43 sind besonders deutlich in Fig. 8 zu erkennen. Darüber hinaus sitzt das kastenförmige Gehäuse des Getriebes 30 zwischen zwei parallel zueinander liegenden Wandabschnitten 46, die sich einstückig von den Seitenwandungen der Oberschiene 40 parallel nach oben erstrecken. Damit sitzt das Getriebe 30, das aus einem Gehäuseoberteil 31 und einem Gehäuseunterteil 32 gebildet ist und bevorzugt aus Kunststoff besteht, zwischen den beiden erwähnten Anschlagnasen 43 und den Wandabschnitten 46. Der dem Betracher zugewandte Wandabschnitt 46 ist mit einer Öffnung versehen, durch welche die Flexwelle 50 in das Innere des Gehäuses des Getriebes 30 ragt.

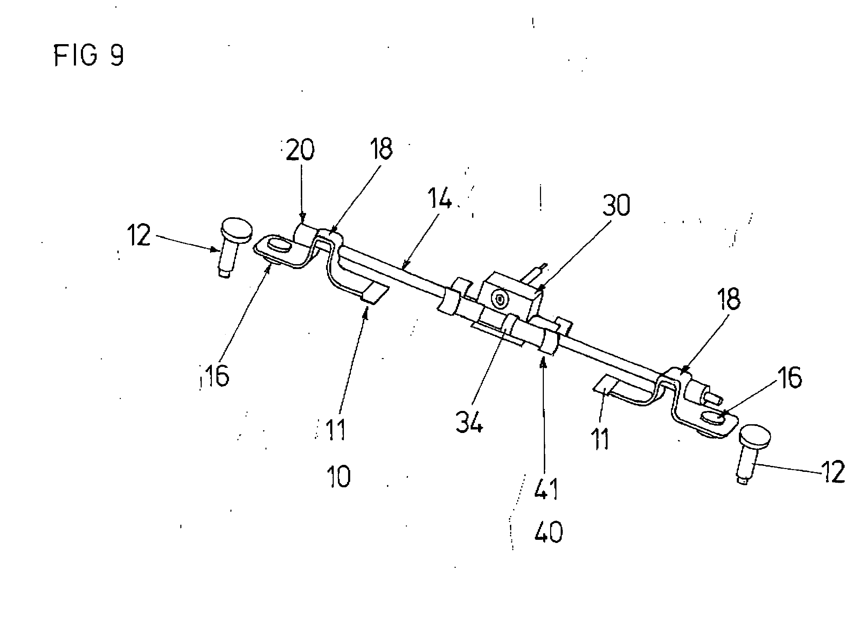

In den Seitenwandungen der Oberschiene 40 sind darüber hinaus sog. Schlitzbrücken 41 eingedrückt. Hierbei handelt es sich um Wandabschnitte, welche durch parallel zueinander in die Seitenwarsdungen der Oberschiene 40 eingearbeitete Schlitze in das Innere der Oberschiene 40 gedrückt sind. Jeweils zwei solcher Schlitzbrücken 41 befinden sich direkt gegenüberliegend zueinander. Diese Schlitzbrücken 41 verengen den Innenraum der Oberschiene 40 und dienen (vgl. Fig. 9) als Anschlag für das Gehäuseoberteil 31 und Gehäuseunterteil 32 des Getriebes 30. Des weiteren befindet sich gegenüberliegend in den beiden Seitenwandungen der Oberschiene 40 eine Ausnehmung 42, welche zwischen den jeweils angeordneten Schlitzbrücken 41 liegt. Diese Ausnehmung 42 dient zur teilweisen Aufnahme einer Stützscheibe 34 in noch zu erläuternder Art und Weise.

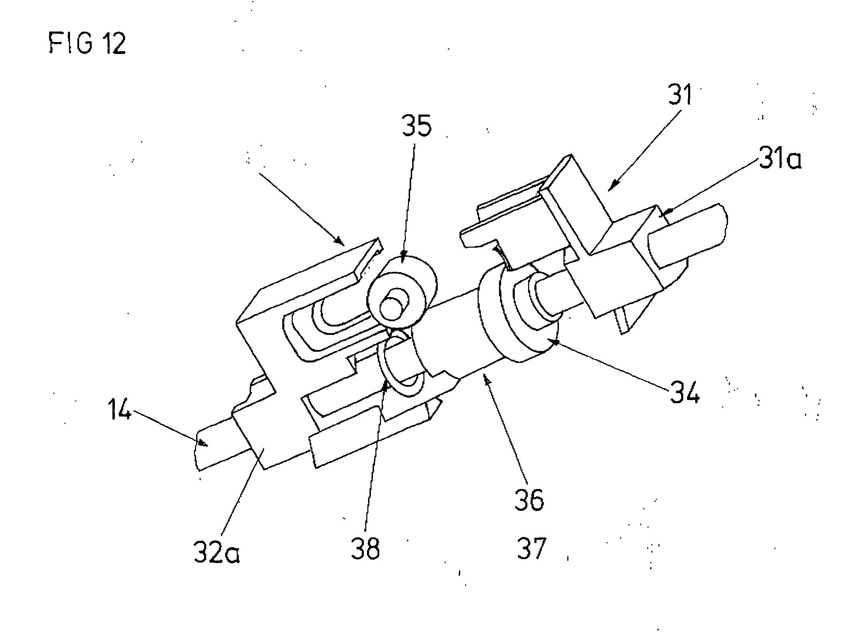

Die Flexwelle 50 ragt in das Innere des Gehäuses des Getriebes 30 über einen Flexwellenadapter 52. Am Ende dieses Flexwellenadapters 52 sitzt im Inneren des Getriebes 30 eine Schnecke 35, die mit einer Spindelmutter 36 in Eingriff steht. Diese Spindelmutter 36 ist mit einem Schneckenrad versehen. Wie insbesondere aus Fig. 12 besonders deutlich erkennbar, ist an diese Spindelmutter mit Schneckenrad einstöckig eine Stützscheibe angeformt. Die Spindelmutter samt Schneckenrad und Stützscheibe bestehen vorzugsweise aus Metall. Zusätzlich kann noch eine Unterlegscheibe 37 innerhalb des Getriebes 30 vorgesehen sein. Das aus dem Gehäuseunterteil 32 und dem Gehäuseoberteil 31 bestehende Gehäuse des Getriebes 30 besteht aus Kunststoff und verfügt über kastenartige Teile 31a und 32a, durch welche die Spindel 14 geführt ist. Die Enden dieser kastenförmigen Teile 31a und 32a finden an den erwähnten Schlitzbrücken 41 ihren Anschlag. Beim Verfahren des Getriebes durch Antrieb über die Flexwelle 50 wird insgesamt durch die beschriebene Anordnung des Getriebes und der Oberschiene die Oberschiene entlang der Spindel und damit innerhalb der Unterschiene 10 mitgenommen.

Wie Fig. 9 zeigt, können auch in die Bodenwandung der Unterschiene Schlitzbrücken 11 eingearbeitet sein. Bei diesen Schlitzbrücken 11 handelt es sich ebenfalls um in Richtung Oberschiene gebogene bzw. eingedrückte Wandabschnitte, welche - wie Fig. 9 zeigt - vor den jeweiligen Endanschlägen 18 gegenüberliegend zu den Befestigungsnieten 16 angeordnet sind.

Wie die Darstellung von Fig. 9 deutlich zeigt, wird in einem Crashfall die auftretende Axialbeschleunigung des Sitzes sowohl durch die Schlitzbrücken 11 und 41 als auch durch die Stützscheibe im Zusammenspiel mit der Ausnehmung in der Oberschiene 40 abgefangen. Hierbei sind die Schlitzbrücken 11 und 41 jeweils paarweise angeordnet, so daß gleichgültig, ob die Beschleunigung nach vorne oder hinten im Crashfall geht, ein wirksames Abstützen der Einstelleinrichtung der Sitzverstellung gewährleistet ist. Zusätzlich wirkt die Stützscheibe 34 im Zusammenspiel mit der Ausnehmung der Oberschiene ebenfalls bei Beschleunigung in Vorwärts- oder Rückwärterichtung die auftretende Kraft auf.

Aus Fig. 9 ist darüber hinaus ebenfalls noch ersichtlich, daß die Endanschläge 18 durch U-förmige Bügel gebildet sind. Die Spindel 14 ragt durch die Längsschenkel dieser U-förmigen Bügel, wobei an den Enden dieser U-förmigen Bügel Haltelaschen vorgesehen sind, durch welche die Befestigungsnieten 16 geführt sind.

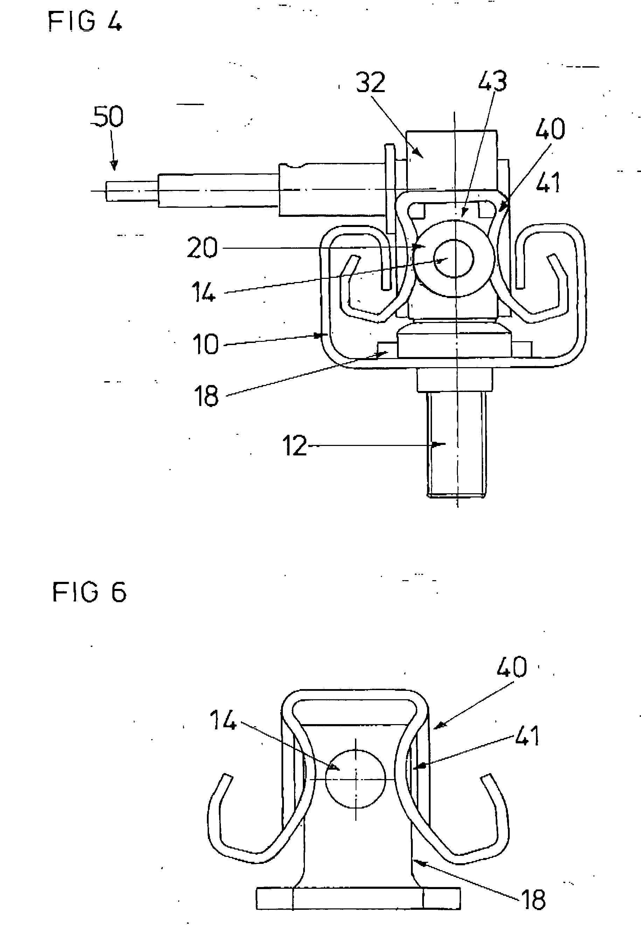

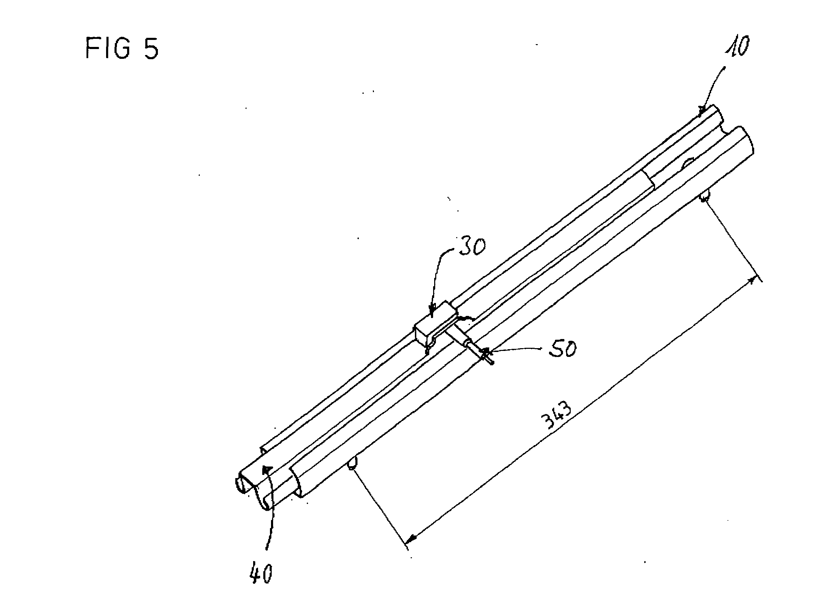

In Fig. 4 ist die in den Fig. 1-3 dargestellte Einrichtung in Stirnansicht der Sitzschiene geschnitten dargestellt. Die bereits erläuterten Bezugszeichen stehen wieder für die bekannten Teile. In der Darstellung von Fig. 4 ist besonders deutlich zu erkennen, daß die im Querschnitt U-förmig gestaltete Unterschiene 10 nach innen zurückgebogene Wandungsteile aufweist. Zwischen diese nach innen gebogenen Wandungsteile der Unterschiene 10 ragen - von den Seitenwandungen der Oberschiene 40 her gesehen - nach außen zurückgebogene Wandungsteile der Oberschiene 40. Durch diese Gestaltung der Oberschiene 40 und der Unterschiene 10 ist gewährleistet, daß ein seitliches Verrutschen der Oberschiene 40 und Unterschiene 10 ausgeschlossen ist. Darüber hinaus ist eine gewisse Führung gewährleistet.

Fig. 5 verdeutlicht schematisch den möglichen Verfahrweg zwischen Oberschiene und Unterschiene. Im vorliegenden Ausführungsbeispiel ist als möglicher Verfahrweg 343mm vorgesehen.

Fig. 6 zeigt in Schnittansicht besonders deutlich die in die Oberschiene 40 eingearbeiteten Schlitzbrücken, die merklich den Innenraum in der U-förmig gestalteten Oberschiene verengen und somit als Anschlag für das Getriebe 30 dienen.

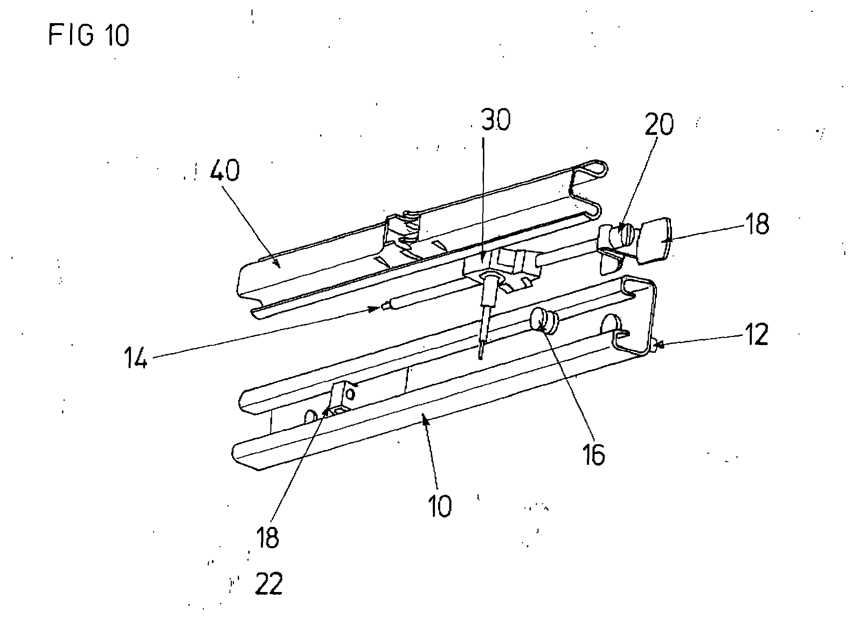

Fig. 10 zeigt die Oberschiene 40 und die Unterschiene 10 samt oben beschriebenen Einzelkomponenten in Explosionsdarstellung. Die bereits bekannten Komponenten sind mit den gleichen Bezugszeichen wie oben versehen.

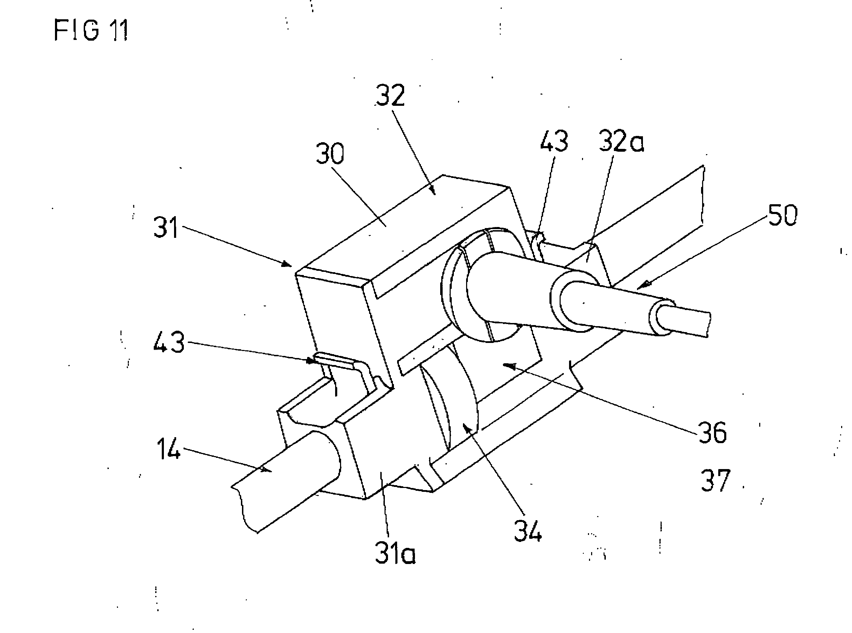

Im Fig. 11 ist das Getriebe 30 mit seinem Gehäuseunterteil 32 und dem Gehäuseoberteil 31 samt kastenförmiger, einstückig angeförmter Elemente im zusammangesetzen Zustand gezeigt. Auch in dieser Darstellung sind die von der oberen Wandung der Oberschiene 40 nach innen umgeklappten Anschlagnasen zu erkennen.

Die seitlich sich von dem Gehäuse des Getriebes 30 hervor streckende Stützscheibe 34 zeigt Fig.11. Die bereits erläutete Fig. 12 zeigt das Getriebe in Explositionsansicht. Hier ist die Spindelmutter 36 samt Schneckenrad und einstückig angeförmter Stützscheibe 34 deutlich zu erkennen. Die Schnecke 35, die von der Flexwelle angetrieben wird, kämmt mit dem Schneckenrad 37. Durch diesen Antrieb bewegt sich das Getriebe entlang der Sindel 14.

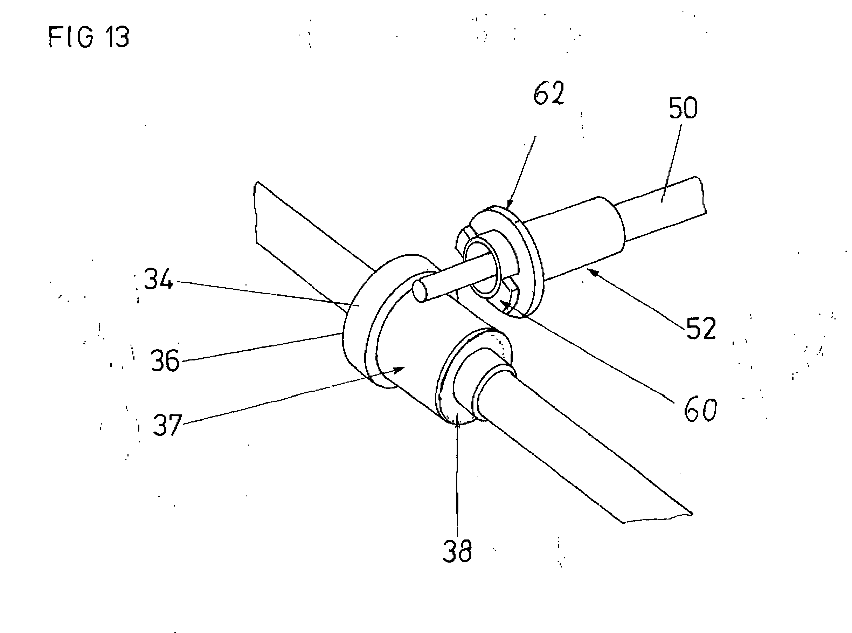

In Fig. 13 ist das Getriebe ohne Gehäuse nochmals deutlich dargestellt, wobei der besseren Deutlichkeit wegen die Schnekke auf der Flexwelle 50 weggelassen wurde. Die Flexwelle 50 ist in über den bereits erwähnten Flexwellenadapter 52 in das Gehäuse des Getriebes geführt. Ein Bajonettverschluss 60 samt Clips 62 sorgt für eine geeignete Halterung der Flexwelle am Gehäuse des Getriebes 30. In Fig. 16 sind nochmals Einzeldarstellungen jeweils im Längsschnitt gezeigt, um die Aufnahme der Crashkräfte zu verdeutlichen. Hierbei ist anzumerken, das die Ausnehmung 42 bzw. Freisparung in der Überschiene 40 im Bereich der Stützscheibe 34 so ausgebildet ist, dass im normal eingebauten Zustand kein Kontakt zwischen Stützscheibe 34 und Oberschiene 40 herrscht. Erst im Crashfall stütz sich die Stützscheibe 34 an der Gehäusewandung der Oberschiene 40 ab.

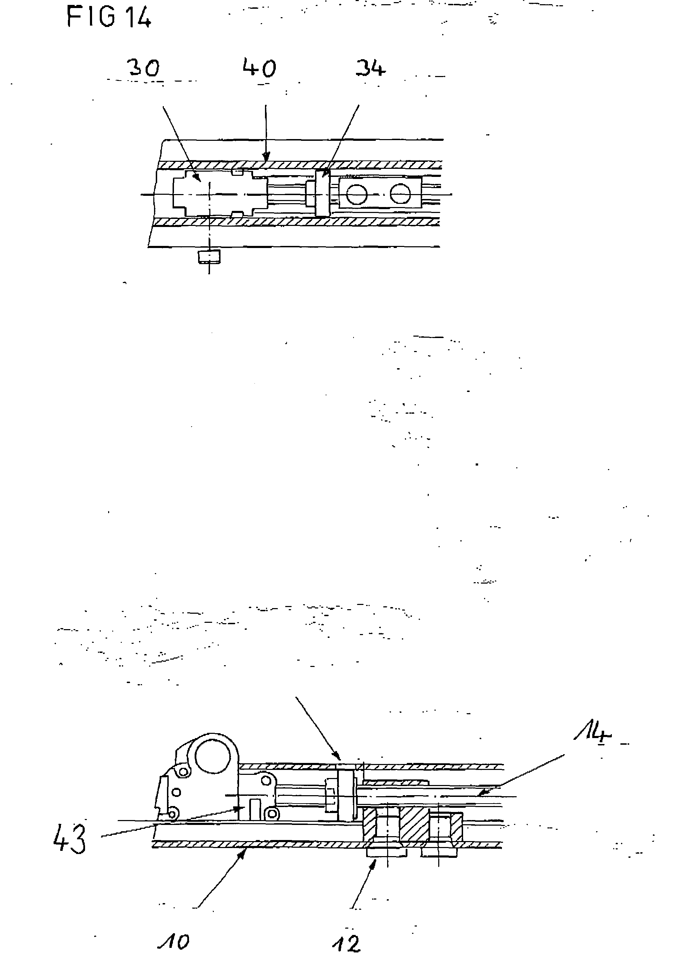

Wie insbesondere aus der Darstellung oben rechts aus der Fig. 14 erkenntlich, berührt die Stützscheibe 34 die Oberschiene 40 im Crashfall mit eine Kontaktfläche, die sigmentförmig links und rechts an der Stützscheibe 34 sich ausgebildet ist. Damit stützt sich die Stützscheibe 34 symmetrisch an der linken und rechten Seitenwandung der Oberschiene 40 ab.

### Bezugszeichenliste

- 10: Unter-schiene
- 11: Schlitzbrücke
- 12: Befestigungsschraube
- 14: Spindel
- 16: Befestigungsniete
- 18: Endanschlag

- 20: Einstellmutter
- 22: Anschlagmutter
- 30: Getriebe
- 31: Gehäuseoberteil
- 32: Gehäuseunterteil
- 34: Stützscheibe
- 35: Schnecke
- 36: Spindelmutter
- 37: Schneckenrad
- 38: Unterlegscheibe
- 40: Oberschiene
- 41: Schlitzbrücke
- 42: Ausnehmung
- 43: Anschlagnase
- 45: Ausnehmung
- 46: Wandabschnitt, Seitenwandung
- 50: Flexwelle
- 52: Flexwellenadapter
- 60: Bajonettverschluß
- 62: Clips
- 31a: Kastenförmiges Teil
- 32a: Kastenförmiges Teil

## Patentansprüche

1. Einrichtung für eine Sitzlängsverstellung, insbesondere innerhalb eines Kfz, mit einer an einem Chassis festgelegten Unterschiene (10) innerhalb der eine Oberschiene (40), an der eine Sitz befestigt ist, motorisch verfahrbar ist, wobei innerhalb der Oberschiene (40) eine an der Unterschiene (10) mit ihren jeweiligen Enden festgelegte Spindel (14) sitzt, auf welcher ein mit der Oberschiene (40) feststehend gekoppeltes Getriebe (30) axial beweglich angeordnet ist,
**dadurch gekennzeichnet, daß** in gegenüberliegenden Seitenwandungen (46) der Oberschiene (40), Ausnehmungen (42) vorgesehehen sind, in welche eine an der Spindel (14) festgelegte Stützscheibe (34), welche mit ihrer Hauptfläche quer zur Längsachse der Spindel (14) sitzt, ragt und welche im Crashfall gegen die Seitenwandungen (46) der Oberschiene (40) gedrückt wird.

2. Einrichtung nach Anspruch 1
**dadurch gekennzeichnet, daß**
das Getriebe (30) klemmend in der Oberschiene (40) gehalten ist und ein Getriebegehäuse aufweist, dessen gegenüberliegende Gehäusewandungen (46) zwischen Wandteile (46) der Oberschiene (40) liegen und dessen obere Wand aus der Oberschiene (40) hervorsteht.

3. Einrichtung nach Anspruch 1 oder 2,
**dadurch gekennzeichnet, daß** mindestens eines der Wandteile (46) der Oberschiene (40) eine Ausnehmung (42) aufweist, durch welche eine mit einem Antriebsmotor gekoppelte Flexwelle (50) geführt ist.

4. Einrichtung nach Anspruch 1, 2 oder 3,
**dadurch gekennzeichnet, daß** Seitenwandungen (46) der Oberschiene Wandungsteile aufweist, welche in das Innere der Oberschiene (40) gedrückt sind, und daß sich das Getriebgehäuse an diesen Wandungsteilen abstützen.

5. Einrichtung nach einem der Ansprüche 1 bis 4,
**dadurch gekennzeichnet, daß** das Getriebegehäuse zwei aus Kunststoff bestehende Gehäuseschalen (31,32) aufweist, welche durch Ultraschweißung miteinander verbunden sind.

6. Einrichtung nach einem der Ansprüche 1 bis 5,
**dadurch gekennzeichnet, daß** die klemmende Halterung des Getriebes (30) durch gegenüberliegend in eine Aussparung der Oberschiene (40) eingearbeitete L-förmig gebogene Metallbügel erreicht wird, zwischen denen das Getriebegehäuse mit Wandschrägen eingeschoben wird.

7. Einrichtung nach einem der Ansprüche 1 bis 6,
**dadurch gekennzeichnet, daß** das Getriebe (30) eine auf der Spindel (14) aufsitzende Spindelmutter (36) mit Schneckenrad (37) und eine mit dem Schneckenrad (37) kämmende Schnekke (35) aufweist.

8. Einrichtung nach Anspruch 7,
**dadurch gekennzeichnet, daß** an die Spindelmutter (36), eine Stützscheibe (34) einstückig angeformt ist.

9. Einrichtung nach Anspruch 8,
**dadurch gekennzeichnet, daß** die Spindelmutter (36) und die Stützscheibe (34) aus Metall bestehen.

10. Einrichtung nach Anspruch 8 oder 9,
**dadurch gekennzeichnet, daß** koaxial auf die Spindelmutter (36) das Schneckenrad (37) durch Kunststoffspritzen aufgebracht ist.

## Claims

1. Device for longitudinal seat adjustment, in particular within a motor vehicle, comprising a lower rail (10) which is fixed to a chassis and inside which an upper rail (40) to which a seat is attached can be displaced in a motor-driven manner, wherein seated within the upper rail (40) is a spindle (14) which is fixed by its respective ends to the lower rail (10), on which spindle a gear mechanism (30) is arranged such that it can move in the axial direction, said gear mechanism being fixedly coupled to the upper rail (40), **characterised in that** recesses (42) are provided in opposite side walls (46) of the upper rail (40), into which recesses there protrudes a supporting ring (34) which is fixed to the spindle (14) and which is seated with its main surface transverse to the longitudinal axis of the spindle (14) and which, in the event of a crash, is pressed against the side walls (46) of the upper rail (40).

2. Device according to claim 1, **characterised in that** the gear mechanism (30) is tightly held in the upper rail (40) and has a gear mechanism housing, of which the opposite housing walls (46) lie between wall parts (46) of the upper rail (40) and the upper wall protrudes out of the upper rail (40).

3. Device according to claim 1 or 2, **characterised in that** at least one of the wall parts (46) of the upper rail (40) has an opening (45), through which a flexible shaft (50) is passed, said flexible shaft being coupled to a drive motor.

4. Device according to claim 1, 2 or 3, **characterised in that** side walls (46) of the upper rail have wall parts which are pressed into the interior of the upper rail (40), and **in that** the gear mechanism housing is supported on these wall parts.

5. Device according to one of claims 1 to 4, **characterised in that** the gear mechanism housing comprises two housing shells (31, 32) made of plastic, which are joined to one another by ultrasonic welding.

6. Device according to one of claims 1 to 5, **characterised in that** the tight holding of the gear mechanism (30) is achieved by means of opposite L-shaped metal clips inserted in a cutout of the upper rail (40), between which metal clips there is pushed the gear mechanism housing with bevelled walls.

7. Device according to one of claims 1 to 6, **characterised in that** the gear mechanism (30) comprises a spindle nut (36) with a worm wheel (37) seated on the spindle (14) and a worm (35) meshing with the worm wheel (37).

8. Device according to claim 7, **characterised in that** a supporting ring (34) is integrally formed on the spindle nut (36).

9. Device according to claim 8, **characterised in that** the spindle nut (36) and the supporting ring (34) are made of metal.

10. Device according to claim 8 or 9, **characterised in that** the worm wheel (37) is applied to the spindle nut (36) coaxially by means of plastic injection moulding.

## Revendications

1. Dispositif de réglage longitudinal d'un siège, en particulier dans un véhicule automobile, comprenant un rail inférieur (10) fixé à un châssis et à l'intérieur duquel un rail supérieur (40) mobile motorisée, supporte un siège, et dans lequel une broche (14) fixée par ses extrémités respectives au rail inférieur (10) à l'intérieur du rail supérieur (40) porte un engrenage (30) solidaire du rail supérieur (40) et mobile axialement sur cette broche,
**caractérisé en ce que**
des évidements (42) sont prévus dans les parois latérales opposées (46) du rail supérieur (40) et un disque d'appui (34), fixé à la broche (14) et dont la surface principale est transversale à l'axe longitudinal de la broche (14), dépasse dans ces évidements et est poussé contre les parois latérales (44) du rail supérieur (40) en cas d'accident.

2. Dispositif selon la revendication 1,
**caractérisé en ce que**
l'engrenage (30) est maintenu serré dans le rail supérieur (40) et présente un boîtier d'engrenage dont les parois latérales opposées (46) sont situées entre les éléments de paroi (46) du rail supérieur (40), sa paroi supérieure dépassant du rail supérieur (40).

3. Dispositif selon la revendication 1 ou 2,
**caractérisé en ce qu'**
au moins l'un des éléments de paroi (46) du rail supérieur (40) présente un évidement (42) à travers lequel est dirigé un câble flexible (50) couplé à un moteur d'entraînement.

4. Dispositif selon la revendication 1, 2 ou 3,
**caractérisé en ce que**
les parois latérales (46) du rail supérieur présentent des éléments de paroi qui sont poussés à l'intérieur du rail supérieur (40), et le boîtier d'engrenage s'appuie contre ces éléments de paroi.

5. Dispositif selon l'une des revendications 1 à 4,
**caractérisé en ce que**
le boîtier d'engrenage présente deux coques de boîtier en matière plastique (31, 32) reliées entre elles au moyen d'un soudage par ultrasons

6. Dispositif selon l'une des revendications 1 à 5,
**caractérisé en ce que**
le support serré de l'engrenage (30) est réalisé par des étriers métalliques courbés en forme de L et usinés de manière opposée dans une découpe du rail supérieur (40) pour pouvoir insérer le boîtier d'engrenage avec ses parois inclinées entre ceux-ci.

7. Dispositif selon l'une des revendications 1 à 6,
**caractérisé en ce que**
l'engrenage (30) présente un écrou de broche (36) situé sur la broche (14) et muni d'une roue hélicoïdale (37) ainsi qu'une vis sans fin s'engrenant avec la roue hélicoïdale (37).

8. Dispositif selon la revendication 7,
**caractérisé par**
un disque d'appui (34) d'une seule pièce sur l'écrou de broche (36).

9. Dispositif selon la revendication 8,
**caractérisé en ce que**
l'écrou de broche (36) et le disque d'appui (34) sont en métal.

10. Dispositif selon la revendication 8 ou 9,
**caractérisé en ce que**
la roue hélicoïdale (37) est appliquée coaxialement sur l'écrou de broche (36) au moyen d'une injection de matière plastique.
